# EUROPEAN PATENT SPECIFICATION

(11) **EP 4 105 572 B1**
(45) Date of publication and mention of the grant of the patent: **16.10.2024**
(21) Application number: 21754391.7
(22) Date of filing: 20.01.2021
(51) Int. Cl.: F24F 12/00

(54) **TOTAL HEAT VENTILATION MACHINE**
VOLLWÄRMELÜFTUNGSMASCHINE
MACHINE DE VENTILATION DE CHALEUR TOTALE

(30) Priority: 12.02.2020 CN 202010088604
(43) Date of publication of application: 21.12.2022
(73) Proprietor: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: ZHU, Lirong, Qingdao, Shandong 266101 (CN); CAI, Yanfang, Qingdao, Shandong 266101 (CN); ZHANG, Zhongxiao, Qingdao, Shandong 266101 (CN)
(74) Representative: Budde Schou A/S
(86) International application number: PCT/CN2021/072823
(87) International publication number: WO 2021/159934

(56) References cited:
- WO-A1-2015/173909
- CN-A- 105 597 566
- CN-A- 107 192 080
- CN-A- 107 192 080
- CN-A- 110 006 152
- CN-A- 110 388 692
- CN-U- 205 227 697
- GB-A- 2 531 731
- JP-A- S59 145 431
- JP-A- S63 156 946
- KR-A- 20060 024 742
- KR-A- 20180 135 636
- KR-A- 20190 050 211
- KR-A- 20190 127 329
- KR-A- 20190 127 329
- US-A- 5 119 987

## Description

### FIELD OF THE INVENTION

The present disclosure relates to the technical field of fresh air blowers, and in particular to a full-heat fresh air blower.

### BACKGROUND OF THE INVENTION

A fresh air blower is an effective air purifying apparatus, which can not only discharge indoor dirty air to an outdoor environment, but also can introduce outdoor fresh air into an indoor environment after taking measures such as filtration, sterilization and disinfection, so as to keep the indoor air fresh and clean. With the increase of people's requirements on the performance of the fresh air blower, the structure of the fresh air blower has also undergone great changes. The performance of the fresh air blower is mainly affected by the structure of air ducts. At present, the more advanced fresh air blowers can usually achieve functions such as full heat exchange and purification, which raises higher requirements on the structural design of the air ducts. For example, published Chinese patent applications CN110388692A and CN107192080A each disclose a fresh air blower device having a full-heat exchange core and a bypass duct, wherein the full-heat exchange core is constructed in such way that outdoor fresh air can exchange heat with exhausted air from a room to recover the heat within the full-heat exchange core, and wherein the bypass duct allows either the fresh air to flow into the room or the return air flowing out of the room bypassing the full-heat exchange core Published US patent US5119987A discloses another fresh air blower according to the preamble of claim 1. Published UK patent application GB2531731A, and published Korean patent application KR1020190050211A also disclose similar fresh air blower device having a full-heat exchange core and a bypass duct.

The air duct structures of existing full-heat fresh air blowers all have some problems. The fresh air blowers with a simple air duct structure often have only a single function, and a working mode thereof cannot be adjusted according to the specific situation of the indoor and outdoor environments; and some fresh air blowers, although capable of switching between several working modes, have a complicated air duct structure and is bulky. The complicated air duct structure increases a wind resistance during airflow circulation process, and the air ducts affect each other, which makes it easy to cause airflow disturbance during the airflow circulation process, thereby reducing a control accuracy of the fresh air blower.

Accordingly, there is a need in the art for a new full-heat fresh air blower to solve the above problem.

### SUMMARY OF THE INVENTION

In order to solve the above problem in the prior art, that is, to solve the problem that an unreasonable design of air duct structure of existing fresh air blowers makes the fresh air blowers bulky, the invention is set out in appended claim 1. Preferred embodiments of the invention are defined in the dependent claims.

In the full-heat fresh air blower provided by the present invention, by providing a bypass air duct at the periphery of the full heat exchange core, in a case where a difference between indoor and outdoor temperatures is small and there is no need to perform full heat exchange, the return air can be quickly discharged by turning on the bypass air duct, so that the wind resistance during the process of discharging the return air can be reduced and a discharge efficiency of the return air can be increased; secondly, when a return air discharge speed is higher than a fresh air introduction speed, the room can be brought into a state of slight negative pressure, which can further improve the efficiency of introducing fresh air. In addition, by arranging the bypass air duct at the periphery of the full heat exchange core, the bypass air duct can also have a streamlined structure, so that the wind resistance of the bypass air duct is reduced, a rapid discharge of the return air is realized, and an internal space of the fresh air blower can also be fully utilized. As compared with arranging the bypass air duct above or below the full heat exchange core, arranging the bypass air duct at the periphery of the full heat exchange core can make the internal space of the fresh air blower more compact, which is advantageous for reducing the volume of the fresh air blower in a vertical direction, and realizing a lightweight and miniaturized design of the fresh air blower.

Further, by arranging the bypass air duct to have a L-shaped structure, the internal space of the fresh air blower can be fully utilized, so as to realize the miniaturization and flat design of the fresh air blower; at the same time, the streamlined structure of the bypass air duct can be ensured, which further reduces the wind resistance and increases the discharge efficiency of the return air.

Further, by arranging the first damper at the corner of the L-shape, the installation and opening/closing control of the first damper can be facilitated, which is advantageous for the realization of the function of bypass mode.

Further, by arranging the fresh air passage and the return air passage to cross each other in the vertical plane, the fresh air passage and the return air passage can have a streamlined structure in the vertical plane, which is not only advantageous for reducing the wind resistance during the circulation of the fresh air and the return air so that the fresh air and the return air can circulate smoothly, but also can shorten the length of the fresh air duct and the return air duct, thereby improving the air supply efficiency and air supply volume of the fresh air blower. The streamlined air duct structure can also reduce the noise generated during the airflow circulation process and realize low-noise operation of the fresh air blower, thereby improving the user experience.

Further, by arranging the second damper upstream of the return air duct and using the second damper to turn on or turn off the return air duct, the return air can be prohibited from entering the full heat exchange core in a non-full heat exchange mode, and the return air can be prevented from being diverted, so that the control accuracy of the fresh air blower can be improved.

Further, by arranging two fans, specifically by selectively activating different fans, multiple working modes of the full-heat fresh air blower can be easily realized.

### BRIEF DESCRIPTION OF DRAWINGS

The full-heat fresh air blower according to an embodiment of the present invention will be described below with reference to the accompanying drawing, in which:
FIG. 1 is a schematic view showing an external structure of a full-heat fresh air blower according to an embodiment of the present invention;
FIG. 2 is a schematic view showing an internal structure of the full-heat fresh air blower according to an embodiment of the present invention;
FIG. 3 is the schematic structural view of a skeleton of the full-heat fresh air blower according to an embodiment of the present invention;
FIG. 4 is a schematic cross-sectional view taken along line A-A in FIG. 3;
FIG. 5 is a schematic cross-sectional view taken along line B-B in FIG. 3; and
FIG. 6 is a schematic cross-sectional view taken along line C-C in FIG. 3;

### List of reference signs:

1: full-heat fresh air blower; 11: top cover; 12: skeleton; 121: outdoor air inlet; 122: outdoor air outlet; 123: indoor air inlet; 124: indoor air outlet; 125: full heat exchange core installation position; 1251: return air outlet; 1252: fresh air inlet; 1253: fresh air outlet; 1254: return air inlet; 126: bypass air duct; 127: upper-layer passage; 128: lower-layer passage; 13: bottom plate; 14: purification module; 141: first filter screen; 142: second filter screen; 143: third filter screen; 144: formaldehyde removal module; 145: fourth filter screen; 146: sterilization module; 15: full heat exchange core; 16: fan; 161: first fan; 162: second fan; 17: third damper; 18: first damper; 19: second damper.

### DETAILED DESCRIPTION OF THE EMBODIMENT(S) OF THE INVENTION

Preferred embodiments of the present invention will be described below with reference to the accompanying drawings. It should be understood by those skilled in the art that these embodiments are only used to explain the technical principles of the present invention, and are not intended to limit the scope of protection of the present invention, which is limited by the scope of the appended claims.

In addition, in order to better illustrate the present invention, numerous specific details are given in the following detailed description. It should be understood by those skilled in the art that the present invention may be carried out without certain specific details. In some examples, the heat exchange principle and the internal structure of the full heat exchange core well known to those skilled in the art are not described in detail, so as to highlight the essence of the present invention.

It should be noted that in the description of the present invention, terms indicating directional or positional relationships, such as "center", "upper", "lower", "left", "right", "vertical", "horizontal", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present invention, unless mentioned in the appended claims. In addition, terms "first", "second", "third" and "fourth" are only used for descriptive purposes, and should not be interpreted as indicating or implying relative importance.

In addition, it should also be noted that in the description of the present invention, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present invention can be interpreted according to specific situations.

In view of the problem pointed out in the "BACKGROUND OF THE INVENTION" that an unreasonable design of air duct structure of existing fresh air blowers makes the fresh air blowers bulky, an embodiment of the present invention provides a full-heat fresh air blower, with the purpose of simplifying the air duct structure of the full-heat fresh air blower, reducing the volume of the fresh air blower, increasing its working mode, improving the working performance, and thus improving the user experience.

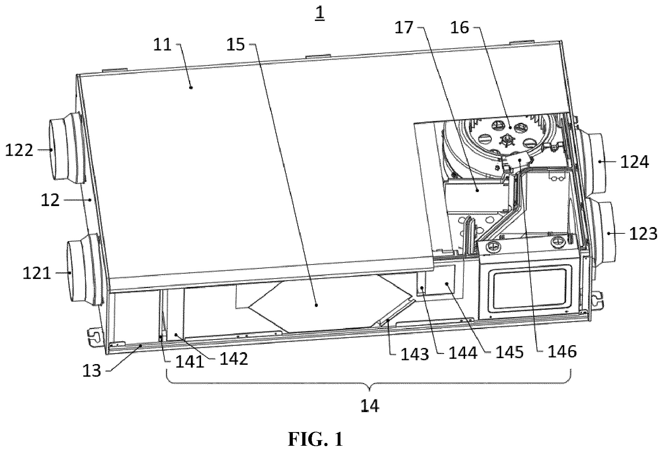

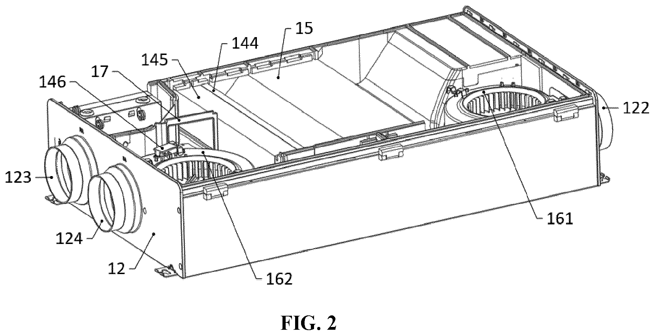

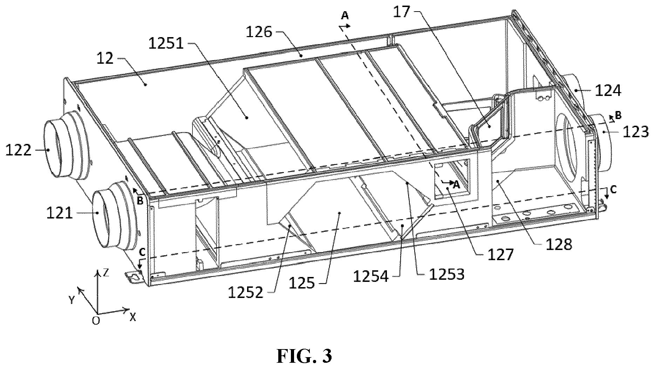

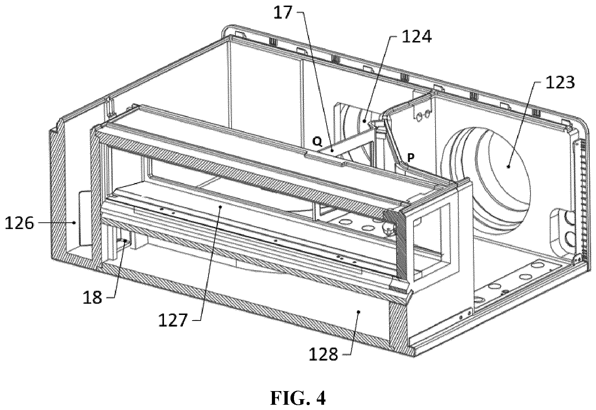

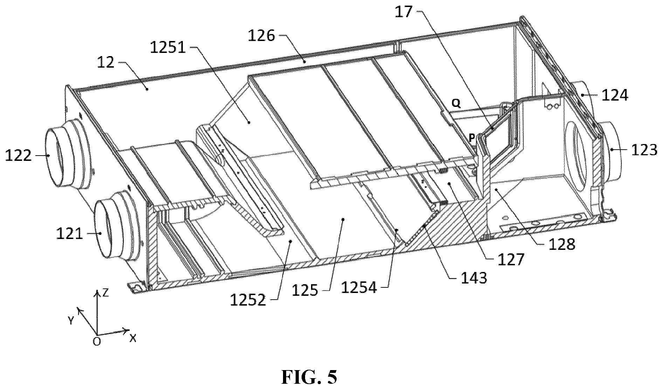

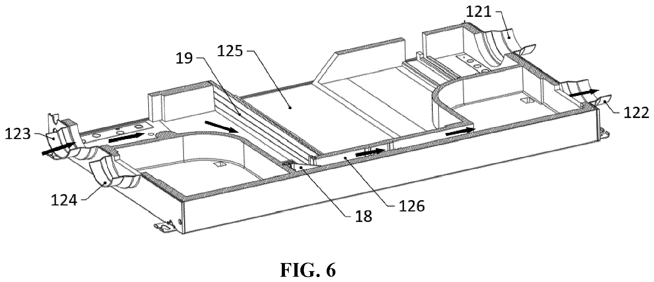

Reference is made to FIGS. 1 to 6, in which FIG. 1 is a schematic view showing an external structure of a full-heat fresh air blower of the present invention; FIG. 2 is a schematic view showing an internal structure of the full-heat fresh air blower of the present invention; FIG. 3 is the schematic structural view of a skeleton of the full-heat fresh air blower of the present invention; FIG. 4 is a schematic cross-sectional view taken along line A-A in FIG. 3; FIG. 5 is a schematic cross-sectional view taken along line B-B in FIG. 3; and FIG. 6 is a schematic cross-sectional view taken along line C-C in FIG. 3.

With reference to FIG. 1, the full-heat fresh air blower 1 provided by an embodiment of the present invention includes a basic structure formed by connecting a top cover 11, a skeleton 12 and a bottom plate 13. The top cover 11 is connected to a top surface of the skeleton 12, and the bottom plate 13 is connected to a bottom surface of the skeleton 12. The bottom plate 13 is provided with bolt seat holes to facilitate the installation of the fresh air blower. During installation, the bottom plate 13 of the fresh air blower faces a surface for installation, such as a top wall or a side wall inside the room. A fresh air duct and a return air duct are formed inside the full-heat fresh air blower 1, and a fan 16, a full heat exchange core 15, a purification module 14, and the like are equipped inside the full-heat fresh air blower 1. The fresh air duct communicates an outdoor air inlet 121 with an indoor air outlet 124 for bringing outdoor fresh air into the indoor environment; and the return air duct communicates an indoor air inlet 123 with an outdoor air outlet 122 for discharging indoor return air to the outdoor environment. The fan 16 is configured to drive air to circulate in the air ducts to form an airflow. Referring to FIG. 2, the fan 16 in this embodiment includes a first fan 161 and a second fan 162. The first fan 161 is arranged at the outdoor air outlet 122 to drive airflow circulation in the return air duct, and the second fan 162 is arranged at the indoor air outlet 124 to drive airflow circulation in the fresh air duct. Rotational speeds of the first fan 161 and the second fan 162 are adjustable.

The full heat exchange core 15 is configured to realize heat exchange of the fresh air and the return air. There are many structures of the full heat exchange core 15, and the most commonly used ones are the two forms of cross-flow and cross-counterflow. In addition, the required form of passage may also be constructed by the combination of a plurality of heat exchange cores. Since the structure and working principle of the full heat exchange core 15 are already relatively mature prior art, the internal structure and working principle of the full heat exchange core 15 will not be described in detail in this embodiment. The full heat exchange core 15 used in this embodiment is a cross-counterflow full heat exchange core 15. Referring to FIGS. 1 and 3, the cross-counterflow full heat exchange core 15 has a regular hexagonal cross-section, and is installed at a full heat exchange core installation position 125 formed on the skeleton 12. A fresh air passage and a return air passage capable of performing heat exchange are formed inside the full heat exchange core 15. The fresh air passage is arranged in the fresh air duct or forms a part of the fresh air duct, and the return air passage is arranged in the return air duct or forms a part of the return air duct, so as to achieve full heat exchange between the fresh air and the return air. For the convenience of description, in this embodiment, a fresh air inlet and a fresh air outlet formed on the fresh air passage as well as a fresh air inlet 1252 and a fresh air outlet 1253 formed at the full heat exchange core installation position 125 are all called fresh air inlet 1252 and fresh air outlet 1253; and a return air inlet and a return air outlet formed on the return air passage as well as a return air inlet 1254 and a return air outlet 1251 formed at the full heat exchange core installation position 125 are all called return air inlet 1254 and return air outlet 1251. A film material of the full heat exchange core 15 is preferably graphene, which has the advantages of low resistance, high heat exchange efficiency, water washability, and long service life.

The purification module 14 is configured to realize purification of the fresh air and the return air. The purification module 14 in the present disclosure includes a first purification module and a second purification module. The first purification module is arranged upstream and downstream of the fresh air duct, and the second purification module is arranged upstream of the return air duct. The first purification module includes at least two filter screens, and the second purification module includes at least one filter screen. Referring to FIGS. 1 and 3, the first purification module in this embodiment includes a first filter screen 141 and a second filter screen 142 that are arranged upstream of the fresh air duct, as well as a formaldehyde removal module 144, a fourth filter screen 145 and a sterilization module 146 that are arranged downstream of the fresh air duct, and the second purification module includes a third filter screen 143 arranged upstream of the return air duct.

In the present invention, in order to realize the miniaturization design of the full-heat fresh air blower 1 and to increase the working modes of the full-heat fresh air blower 1 so that it can keep an efficient and low power consumption operation under different indoor and outdoor environment situations, a bypass air duct 126 is further provided in the full-heat fresh air blower 1 of the present invention in addition to the fresh air duct and the return air duct. Referring to FIGS. 3, 4 and 6, the bypass air duct 126 communicates with the indoor air inlet 123 and the outdoor air outlet 122. The bypass air duct 126 is provided therein with a first damper 18 for turning on or turning off the bypass air duct 126. The bypass air duct 126 is arranged at a periphery of the full heat exchange core 15. The arrangement of the bypass air duct 126 enables the full-heat fresh air blower 1 to realize the bypass mode. In the bypass mode, the fresh air can be purified and input into the room through the fresh air passage, and the return air can be directly discharged to the outside through the bypass air duct 126 without heat exchange with the fresh air. The bypass mode is suitable for situations where the temperature difference between the indoor environment and the outdoor environment is small. Therefore, even if the fresh air does not exchange heat with the return air, there will be no major influence on the indoor temperature.

Next, referring to FIG. 6, the bypass air duct 126 of the full-heat fresh air blower 1 in the present embodiment is surroundingly arranged at the periphery of the full heat exchange core 15 in a L shape, and the first damper 18 is arranged at a corner of the L shape. It should be noted that the "periphery" in the present disclosure means that the bypass air duct 126 is arranged outside the full heat exchange core 15 according to the orientation of the top view of FIG. 6.

Referring to FIGS. 1 to 3, in addition to the return air passage formed inside the full heat exchange core 15, the return air duct in an embodiment of the present invention includes a first upstream section located upstream of the return air passage and a second downstream section located downstream of the return air passage. In addition to the fresh air passage formed inside the full heat exchange core 15, the fresh air duct includes a second upstream section located upstream of the fresh air passage and a first downstream section located downstream of the fresh air passage. Part of the first downstream section of the fresh air duct and part of the first upstream section of the return air duct are arranged in upper and lower layers in a vertical plane to form a double-layer air duct. Referring to FIG. 4, the double-layer passage includes an upper-layer passage 127 and a lower-layer passage 128. The upper-layer passage 127 forms a part of the first downstream section, and the lower-layer passage 128 forms a part of the first upstream section.

A ventilation path of the fresh air duct of the full-heat fresh air blower 1 of an embodiment of the present invention is described as follows: outdoor fresh air enters the second upstream section of the fresh air duct from the outdoor air inlet 121, passes through the first filter screen 141 and the second filter screen 142 in the second upstream section to achieve preliminary filtering, then enters the fresh air passage of the full heat exchange core 15 from the fresh air inlet 1252, enters the upper-layer passage 127 from the fresh air outlet 1253, passes through the formaldehyde removal module 144 and the fourth filter screen 145 in the upper-layer passage 127 to achieve further purification, and then enters the room from the indoor air outlet 124 after being sterilized by the sterilization module 146. A ventilation path of the return air duct is described as follows: indoor return air enters the first upstream section of the return air duct from the indoor air inlet 123, then enters the lower-layer passage 128 of the first upstream section, passes through the third filter screen 143 arranged at the return air inlet 1254, enters the return air passage after being filtered, then enters the second downstream section of the return air duct through the return air outlet 1251, and is finally discharged to the outside through the outdoor air outlet 122. A return air path of the bypass air duct is described as follows: the indoor return air enters the first upstream section of the return air duct from the indoor air inlet 123, then enters the lower-layer passage 128 of the first upstream section, then enters the bypass air duct 126, enters the second downstream section of the return air duct after passing through the first damper 18, and is finally discharged to the outside through the outdoor air outlet 122.

Preferably, in order to enable smoother circulation paths of the fresh air and the return air, the fresh air passage and the return air passage in the fresh air duct and the return air duct are arranged to have a structure in which they cross each other in the vertical plane. The return air inlet 1254 of the return air passage is connected to the first upstream section, and the fresh air outlet 1253 of the fresh air passage is connected to the first downstream section. Next, reference is made to FIG. 3. Based on the orientation in FIG. 3, in the vertical plane, that is, in the XOZ plane, the lower-layer passage 128 constituting the first upstream section is connected to the return air inlet 1254, and the upper-layer passage 127 constituting the first downstream section is connected to the fresh air outlet 1253, so that projections of the paths of the fresh air and the return air in the XOZ plane are in a state of crossing each other. Still further, the second upstream section and the second downstream section are arranged side by side in the vertical plane. Referring to FIG. 3, in the vertical plane, that is, in the YOZ plane, the second upstream section and the second downstream section are arranged side by side. Such an arrangement is not only advantageous for the installation of the fresh air blower, but also brings the fresh air duct and the return air duct in a state of crossing each other in the XOY plane, so that the entire fresh air duct and return air duct are in a three-dimensionally crossing mesh structure in the fresh air blower, which not only ensures the streamlined structure of the air duct to maintain a low wind resistance, but also makes full and reasonable use of the internal space of the fresh air blower to realize miniaturization of the fresh air blower.

In order to enable the fresh air blower to operate in different working modes and to accurately control a flow direction of the return air during operation, a second damper 19 is further provided in the return air duct. The second damper 19 is arranged upstream of the return air duct, i.e., in the first upstream section, and is configured to turn on or turn off the return air duct. Referring to FIGS. 3 and 6, the second damper 19 adopts a grille damper; of course, other structures may also be used. By controlling the second damper 19 to be closed, the path for the return air to enter the return air passage can be blocked, thereby closing the return air duct. When the full-heat fresh air blower 1 is operating in the bypass mode, part of the return air can be prevented from entering the return air passage of the full heat exchange core 15, thereby avoiding airflow disturbance and realizing precise control of the fresh air blower. In addition, the full-heat fresh air blower 1 further includes a controller for selectively opening the first damper 18 and the second damper 19 so as to switch the working mode of the full-heat fresh air blower 1.

Further, in order to increase the functions of the full-heat fresh air blower 1 and realize an internal circulation mode, a third damper 17 is provided in the first upstream section of the return air duct. In combination with the upper-layer passage 127 in the first downstream section and the lower-layer passage 128 in the first upstream section, which are structurally designed in an upper-lower relationship, the arrangement of the third damper 17 enables the first upstream section to be communicated with the first downstream section when the third damper 17 is opened; and when the third damper 17 is closed, the communication between the first upstream section and the first downstream section can be cut off. Referring to FIGS. 3 to 5, the third damper 17 includes a damper frame and a damper panel, and there are at least two working positions for the third damper 17: a P working position and a Q working position. Each of the two working positions is provided with a damper frame, and the opening and closing of the third damper 17 is realized by controlling the damper panel to swing to the damper frame. When the third damper 17 is opened, that is, when the damper panel is at the Q working position, the return air entering from the indoor air inlet 123 enters the upper-layer passage 127 after entering the first upstream section, enters the first downstream section directly through the third damper 17 after turning back from the upper-layer passage 127, and then is discharged from the indoor air outlet 124, so as to realize the internal circulation mode of the fresh air blower. When the third damper 17 is closed, that is, when the damper panel is at the P working position, the return air entering from the indoor air inlet 123 can only enter the lower-layer passage 128, and then enter the bypass air duct 126 or the return air passage from the lower-layer passage 128.

The achievable working modes of the full-heat fresh air blower 1 provided by the embodiment of the present invention will be described in detail below.

A full-heat mode, in which: the indoor return air and the outdoor fresh air can perform full heat exchange in the fresh air blower, so that the heat or cold in the return air is transferred to the fresh air to realize the recovery of the heat or cold, thus making full use of energy and avoiding energy waste. The full-heat mode is suitable for situations where the difference between indoor and outdoor temperatures is large. In the full-heat mode, the fresh air and the return air need to pass through the full heat exchange core 15 at the same time. Referring to FIGS. 1 and 3, in the full-heat mode, the third damper 17 is closed, that is, the damper panel of the third damper 17 swings to the P working position to cut off the communication between the fresh air duct and the return air duct; the first damper 18 is closed to close the bypass air duct 126, the second damper 19 is opened to turn on the return air duct, and the first fan 161 and the second fan 162 run at the same rotational speed. In the return air duct, the indoor return air enters the first upstream section of the return air duct from the indoor air inlet 123, then enters the return air passage of the full heat exchange core 15 through the return air inlet 1254, enters the second downstream section from the return air outlet 1251 after heat exchange with the fresh air in the fresh air passage, and is finally discharged to the outside through the outdoor air outlet 122. In the fresh air duct, the outdoor fresh air enters the second upstream section of the fresh air duct from the outdoor air inlet 121, then enters the fresh air passage of the full heat exchange core 15 through the fresh air inlet 1252, enters the first downstream section from the fresh air outlet 1253 after heat exchange with the return air in the return air passage, and is finally discharged into the room through the indoor air outlet 124 to realize renewal of the indoor air. It can be seen that in the process of full heat exchange, in the XOZ plane, the fresh air in the fresh air passage and the return air in the return air passage are in a state of crossing each other in counterflows; and in the XOY plane, the fresh air in the fresh air duct and the return air in the return air duct are also in a state of crossing each other. Therefore, a streamlined fresh air duct and a streamlined return air duct are constructed inside the full-heat fresh air blower 1, so that the fresh air duct and the return air duct form a three-dimensional mesh-like cross structure by means of the double-layer air duct structure, which can therefore make full use of the internal space of the fresh air blower to construct a streamlined air duct structure, shorten the length of the air duct, and also make the airflow circulation smoother.

A slight positive pressure mode, in which: the indoor air pressure is slightly higher than the outdoor air pressure, so that the dirty air in the room can be discharged outdoors through indoor windows and the like in addition to being discharged outdoors through the fresh air blower. In the slight positive pressure mode, the fresh air enters the room at a higher speed than the discharge speed of the return air, so the heat exchange efficiency is higher than that of the full-heat mode, and the outdoor fresh air can be prevented from entering the room without being treated. In the slight positive pressure mode, both the fresh air and the return air need to enter the full heat exchange core 15 for heat exchange. The slight positive pressure mode is the same as the full-heat mode in the form of opening and closing the damper. Differently, in the slight positive pressure mode, the rotational speed of the first fan 161 is lower than the rotational speed of the second fan 162, so that the entering speed of the fresh air is higher than the discharge speed of the return air.

A bypass mode, in which: when the indoor air is seriously polluted, such as in case of smoking and other operations that make the room filled with irritating smells, users often want the indoor air of poor quality to be quickly discharged to the outside and to be replaced with fresh outdoor air. In the full-heat mode or bypass mode, due to the need for heat exchange, there will be a certain wind resistance in the process of airflow circulation, which will weaken the airflow speed and reduce the air renewal speed. Therefore, there is a need for a working mode of the fresh air blower that can realize rapid air discharge, that is, a bypass mode. Referring to FIGS. 3 and 6, in the bypass mode, the third damper 17 is closed, that is, the damper panel of the third damper 17 swings to the P working position, the first damper 18 is opened to turn on the bypass air duct 126, the second damper 19 is closed to turn off the return air duct, and the first fan 161 and the second fan 162 run at the same rotational speed. In the fresh air duct, the outdoor fresh air enters the second upstream section of the fresh air duct from the outdoor air inlet 121, then enters the fresh air passage bypassing the heat exchange core through the fresh air inlet 1252, then enters the first downstream section from the fresh air outlet 1253, and finally is discharged into the room through the indoor air outlet 124.

An internal circulation mode, in which: when the outdoor air quality is poor, such as in case of severe outdoor haze and sandstorms, the indoor air quality is relatively better; at this time, if the difference between indoor and outdoor temperatures is large, there is no need to introduce the fresh air, and turning on the internal circulation mode to perform self-purification of the indoor air would be enough. Referring to FIGS. 3 and 4, in the internal circulation mode, the second fan 162 in the fresh air duct is turned on, and the first fan 161 in the return air duct is turned off. At this time, it is necessary to open the third damper 17 and close the first damper 18 and the second damper 19; that is, the damper panel of the third damper 17 is swung to the Q working position so as to communicate the first downstream section of the fresh air duct with the indoor air inlet 123. Since an external pipeline of the fresh air blower is usually provided with a valve separately, at this time, it is necessary to control the valve of the pipeline communicating with the fresh air duct to be closed so as to turn off the fresh air duct. After the indoor return air enters the first upstream section through the indoor air inlet 123, it will enter the first downstream section of the fresh air duct through the third damper 17. In this process, the return air is purified by the formaldehyde removal module 144 and the fourth filter screen 145 and then returns to the room through the indoor air outlet 124 to realize the internal circulation of the indoor air.

A fresh air mode, in which: the fresh air blower can only turn on the second fan 162 to turn on the fresh air duct, and turn off the first fan 161 to turn off the return air duct; in the fresh air mode, the third damper 17 is closed to cut off the communication between the first downstream section and the indoor air inlet 123, so as to prevent the occurrence of airflow turbulence. In fresh air mode, the indoor air is mainly discharged through windows, door slits, etc.

An exhaust mode, which is suitable for situations where the outdoor air quality is relatively high and does not need to be purified. When the outdoor air quality is very good, the fresh air can enter the room directly through the doors and windows, and it is only necessary to discharge the dirty indoor air directly to the outside. At this time, there is no need to perform full heat exchange, the fresh air does not need to enter the fresh air duct, and the return air does not need to enter the return air duct. At this time, the third damper 17 is closed, that is, the damper panel of the third damper 17 is swung to the P working position, the first damper 18 is opened, and the second damper 19 is closed; the first fan 161 is kept turned on, the second fan 162 is turned off, and the indoor return air is directly discharged to the outside through the bypass air duct 126.

It should be noted that in the embodiment of the present invention, the air entering through the outdoor air inlet 121 is called the fresh air, and the air entering through the indoor air inlet 123 is called the return air. It should be noted that in the full-heat fresh air blower 1 of the present disclosure, the third damper 17 is kept open only when operating in the internal circulation mode, and the third damper 17 is kept closed when operating in other modes. The direction of the black solid arrows in FIG. 6 is the flow direction of the return air.

In the full-heat fresh air blower provided by the present invention, by providing a bypass air duct at the periphery of the full heat exchange core, in a case where the difference between indoor and outdoor temperatures is small and there is no need to perform full heat exchange, the return air can be quickly discharged by turning on the bypass air duct, so that the wind resistance during the process of discharging the return air can be reduced and the discharge efficiency of the return air can be increased; secondly, when the return air discharge speed is higher than the fresh air introduction speed, the room can be brought into a state of slight negative pressure, which can further improve the efficiency of introducing fresh air. In addition, by arranging the bypass air duct at the periphery of the full heat exchange core, the bypass air duct can also have a streamlined structure, so that the wind resistance of the bypass air duct is reduced, a rapid discharge of the return air is realized, and an internal space of the fresh air blower can also be fully utilized. As compared with arranging the bypass air duct above or below the full heat exchange core, arranging the bypass air duct at the periphery of the full heat exchange core can make the internal space of the fresh air blower more compact, which is advantageous for reducing the volume of the fresh air blower in the vertical direction, and realizing a lightweight and miniaturized design of the fresh air blower.

Hitherto, the technical solutions of the present invention have been described in connection with the preferred embodiments shown in the accompanying drawings, but it is easily understood by those skilled in the art that the scope of protection of the present invention is obviously not limited to these specific embodiments. Modifications of the embodiments are possible without departing from the scope of the appended claims.

## Claims

1. A full-heat fresh air blower (1), comprising:
a fresh air duct, which communicates an outdoor air inlet (121) with an indoor air outlet (124);
a return air duct, which communicates an indoor air inlet (123) with an outdoor air outlet (122);
a full heat exchange core (15), which comprises a fresh air passage and a return air passage that can perform heat exchange, wherein the fresh air passage is arranged in the fresh air duct, and the return air passage is arranged in the return air duct, so as to realize full heat exchange between fresh air and return air; and
a bypass air duct (126), which communicates with the indoor air inlet (123) and the outdoor air outlet (122), is provided therein with a first damper (18) for turning on or turning off the bypass air duct (126), and is arranged at a periphery of the full heat exchange core (15);
**characterized in that**
the bypass air duct (126) is surroundingly arranged at the periphery of the full heat exchange core (15) in a L shape,
wherein
the first damper (18) is arranged at a corner of the L shape.

2. The full-heat fresh air blower (1) according to claim 1, wherein the fresh air passage and the return air passage are arranged to cross each other in a vertical plane (XOZ).

3. The full-heat fresh air blower (1) according to claim 2, wherein the return air duct is further provided therein with a second damper (19), which is arranged upstream of the return air passage and is configured to turn on or turn off the return air duct.

4. The full-heat fresh air blower (1) according to claim 3, further comprising a controller, which is configured to selectively open the first damper (18) and the second damper (19), so as to switch a working mode of the full-heat fresh air blower (1).

5. The full-heat fresh air blower (1) according to claim 1, further comprising a first fan (161) and a second fan (162), wherein the first fan (161) is arranged at the outdoor air outlet (122) to drive airflow circulation in the return air duct, and the second fan (162) is arranged at the indoor air outlet (124) to drive airflow circulation in the fresh air duct.

6. The full-heat fresh air blower (1) according to claim 1, further comprising a first purification module and a second purification module, wherein the first purification module includes a first filter screen (141) and a second filter screen (142) arranged upstream of the fresh air duct and a formaldehyde removal module (144), a fourth filter screen (145) and a sterilization module (146) arranged downstream of the fresh air duct, and the second purification module includes a third filter screen (143) arranged upstream of the return air duct.

7. The full-heat fresh air blower (1) according to claim 1, wherein a film material of the full heat exchange core (15) is graphene.

## Patentansprüche

1. Ein Vollwärme-Frischluftgebläse (1), bestehend aus:
einen Frischluftkanal, der einen Außenlufteinlass (121) mit einem Innenluftauslass (124) verbindet;
einen Rückluftkanal, der einen Innenlufteinlass (123) mit einem Außenluftauslass (122) verbindet;
einen vollständigen Wärmeaustauschkern (15), der einen Frischluftkanal und einen Rückluftkanal umfasst, der Wärmeaustausch durchführen kann, wobei der Frischluftkanal im Frischluftkanal angeordnet ist und der Rückluftkanal im Rückluftkanal angeordnet ist, um einen vollständigen Wärmeaustausch zwischen Frischluft und Rückluft zu realisieren; und
ein Bypass-Luftkanal (126), der mit dem Innenraumlufteinlass (123) und dem Außenluftauslass (122) kommuniziert, ist darin mit einer ersten Klappe (18) zum Ein- oder Ausschalten des Bypass-Luftkanals (126) versehen und an einer Peripherie des vollständigen Wärmeaustauschkerns angeordnet (15);
**dadurch gekennzeichnet, dass** der Bypass-Luftkanal (126) an der Peripherie des vollen Wärmeaustauschkerns (15) in L-Form umlaufend angeordnet ist,
wobei der erste Dämpfer (18) an einer Ecke der L-Form angeordnet ist.

2. Das Vollheiz-Frischluftgebläse (1) gemäß Anspruch 1, wobei der Frischluftdurchlass und der Rückluftdurchlass so angeordnet sind, dass sie sich in einer vertikalen Ebene kreuzen (XOZ).

3. Das Vollwärme-Frischluftgebläse (1) gemäß Anspruch 2, wobei der R ü ckluftkanal darin weiter mit einer zweiten Klappe (19) versehen ist, die stromaufwärts dem Rückluftkanal angeordnet ist und zum Ein- oder Ausschalten des Rückluftkanals konfiguriert ist.

4. Das Vollheiz-Frischluftgebläse (1) gemäß Anspruch 3, ferner mit einem Regler, der so konfiguriert ist, dass die erste Klappe (18) und die zweite Klappe (19) selektiv geöffnet werden, um einen Arbeitsmodus des Vollheiz-Frischluftgebläses (1) zu schalten.

5. Das Vollwärme-Frischluftgebläse (1) gemäß Anspruch 1, das ferner einen ersten Ventilator (161) und einen zweiten Ventilator (162) umfasst, wobei der erste Ventilator (161) am Außenluftauslass (122) angeordnet ist, um die Luftstromzirkulation im Rückluftkanal zu fördern, und der zweite Ventilator (162) am Innenluftauslass (124) angeordnet ist, um die Luftstromzirkulation im Frischluftkanal zu fördern.

6. Das Vollwärme-Frischluftgebläse (1) gemäß Anspruch 1, das ferner ein erstes Reinigungsmodul und ein zweites Reinigungsmodul umfasst, wobei das erste Reinigungsmodul ein erstes Filtersieb (141) und ein zweites Filtersieb (142) umfasst, das stromaufwärts dem Frischluftkanal und einem Formaldehydentnahmemodul (144) angeordnet ist, ein viertes Filtersieb (145) und ein Sterilisationsmodul (146), das stromabwärts dem Frischluftkanal angeordnet ist, und das zweite Reinigungsmodul enthält ein drittes Filtersieb (143), das dem Rückluftkanal vorgelagert ist.

7. Das Vollwärme-Frischluftgebläse (1) gemäß Anspruch 1, wobei ein Filmmaterial des vollen Wärmeaustauschkerns (15) Graphen ist.

## Revendications

1. Ventilateur d'air frais entièrement chaud (1) comprenant:
Une conduite d'air frais mettant en communication l'entrée d'air extérieur (121) avec la sortie d'air intérieur (124);
Un conduit de retour d'air qui met en communication l'entrée d'air intérieur (123) avec la sortie d'air extérieur (122);
Un noyau d'échange thermique total (15) comprenant un canal de vent neuf apte à réaliser un échange thermique et un canal de retour d'air, le canal de vent neuf étant disposé dans le canal de vent neuf et le canal de retour d'air étant disposé dans le canal de retour d'air pour réaliser un échange thermique total entre le vent neuf et le vent de retour; Et
Un conduit de dérivation d'air (126) communiquant avec une entrée d'air intérieur (123) et une sortie d'air extérieur (122), dans lequel est disposé un premier volet (18) d'ouverture ou de fermeture du conduit de dérivation d'air (126), et disposé autour du noyau d'échange thermique total (15);
**Caractérisé en ce que** le conduit de dérivation d'air (126) est disposé à la périphérie du noyau d'échange thermique total (15) autour d'un l,
Dans lequel le premier amortisseur (18) est disposé au coin du L.

2. Ventilateur d'air frais entièrement chaud selon la revendication 1, **caractérisée en ce que** le canal d'air frais et le canal de retour d'air sont agencés pour se croiser dans un plan vertical (xoz).

3. Ventilateur d'air frais entièrement chaud selon la revendication 2, **caractérisée en ce que** le conduit de retour d'air est en outre muni d'un second volet (19) disposé en amont du canal de retour d'air et configuré pour ouvrir ou fermer le canal de retour d'air.

4. Ventilateur d'air frais entièrement chaud selon la revendication 3, **caractérisée en ce qu** 'elle comprend en outre un contrôleur configuré pour ouvrir sélectivement le premier volet (18) et le deuxième volet (19) de manière à Commuter le mode de fonctionnement du soufflant neuf (1) de type tout chaud.

5. Ventilateur d'air frais entièrement chaud selon la revendication 1, comprenant en outre un premier ventilateur (161) et un deuxième ventilateur (162), **caractérisé en ce que** le premier ventilateur (161) est disposé à la sortie d'air extérieur (122) pour entraîner la circulation d'un flux d'air dans le conduit de retour d'air, le deuxième ventilateur (161) étant disposé à la sortie d'air extérieur (122).

6. Ventilateur d'air frais entièrement chaud selon la revendication 1, **caractérisée en ce qu** 'elle comprend un premier module de purification comprenant un premier (141) et un deuxième (142) Filtres disposés en amont du conduit d'air frais, et un module d'élimination du formaldéhyde (144), un quatrième (145) filtre et un module de stérilisation (146) disposés en aval du conduit d'air frais, le deuxième module de purification comprenant un troisième (143) filtre disposé en amont du conduit de retour d'air.

7. Ventilateur d'air frais entièrement chaud selon la revendication 1, **caractérisée en ce que** le matériau membranaire du noyau échangeur de chaleur (15) total est du graphène.
